# FASCICULE DE BREVET EUROPEEN

(11) **EP 2 960 390 B1**
(45) Date de publication et mention de la délivrance du brevet: **08.06.2022**
(21) Numéro de dépôt: 15173149.4
(22) Date de dépôt: 22.06.2015
(51) Int. Cl.: E04B 2/70, E04C 3/29

(54) **PAROI OBTENUE PAR EMPILEMENT DE POUTRES À ISOLATION INTÉGRÉE**
WAND AUS GESTAPELTEN BALKEN MIT INTEGRIERTER WÄRMEDÄMMUNG
WALL OBTAINED BY STACKING BEAMS WITH INTEGRATED INSULATION

(30) Priorité: 24.06.2014 FR 1455825
(43) Date de publication de la demande: 30.12.2015
(73) Titulaire: H.C.F., 39380 Bans (FR)
(72) Inventeur: GOY, Didier, 74230 Manigod (FR)
(74) Mandataire: Cabinet Laurent & Charras

(56) Documents cités:
- EP-A1- 2 196 593
- EP-A2- 2 397 620
- WO-A1-2005/017276
- WO-A1-2013/167848
- WO-A2-98/00617
- DE-A1-102004 038 766
- GB-A- 157 597
- US-A- 5 966 894

## Description

La présente invention concerne un perfectionnement pour poutres empilées pour la réalisation par exemple d'un mur d'habitation. L'invention concerne plus précisément une paroi comportant des poutres à isolation intégrée.

La recherche constante d'économie d'énergie force les industriels à rechercher des solutions notamment d'isolation des structures d'habitation. Ajoutons que les constructions d'habitation en bois sont de plus en plus utilisées. Ainsi on connait des constructions comme par exemple des chalets, qui sont réalisés par empilage vertical de poutres horizontales.

Les constructeurs ont cherché des solutions, et ont par exemple mis au point des constructions du type chalets dont les murs extérieurs sont réalisés par des empilages de poutres, avec une paroi supplémentaire isolante disposée coté intérieur. C'est par exemple le cas de la construction divulguée par le brevet français publié sous le numéro 2 678 657. On a compris que ce type de disposition n'est pas satisfaisant.

La présente invention propose une paroi obtenue par empilement de poutres horizontales selon la revendication 1.

### [PARAGRAPHE À INSÉRER EN PAGE 1]

Le document WO 98/00617 divulgue une structure formant un plancher, un mur ou un plafond formée d'un assemblage d'une succession de planches dans un même plan, intercalées d'entretoises et d'éléments d'isolation.

Ajoutons que dans l'espace interne est disposée une succession d'entretoises et d'éléments d'isolation les dites entretoises sont fixées aux parois.

Précisons que les entretoises sont en matériau rigide comme du bois et qu'elles peuvent être monobloc ou réalisées avec un assemblage de plaques de bois, tandis que les parois latérales et la paroi interne sont des planches de bois.

Notons que la hauteur de chacune des parois de poutre est avantageusement égale, mais il pourrait en être autrement tel que cela est précisé dans la partie description.

Le matériau isolant est de la mousse synthétique telle que du polystyrène, du polyuréthane, voir en laine de roche ou en vermiculite.

Les entretoises de l'un des espaces latéraux sont décalées par rapport aux blocs entretoises de l'autre espace latéral. Ainsi, au droit de chacun des blocs entretoise se trouve un espace de remplissage et non un bloc entretoise.

Notons que les entretoises disposées dans les espaces latéraux sont fixées aux parois adjacentes, à savoir d'une part à la paroi latérale de poutre correspondante, et d'autre part à la paroi interne de poutre.

Selon une caractéristique, les épaisseurs des trois parois constituant la poutre sont identiques, mais il pourrait en être autrement, les épaisseurs des trois parois sont différentes.

Selon une caractéristique supplémentaire, les poutres successives adjacentes sont retenues l'une à l'autre par coopération de formes.

D'autres caractéristiques et avantages de l'invention se dégageront de la description qui va suivre en regard des dessins annexés qui ne sont donnés qu'à titre d'exemples non limitatifs.
La figure 1 est une illustration en perspective.
La figure 2 est une vue de dessus.
La figure 3 est une vue en bout.

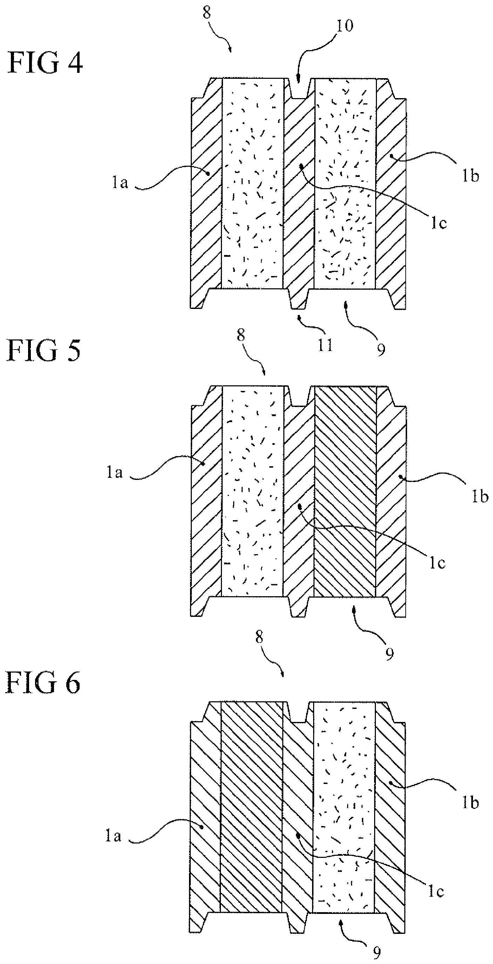

Les figures 4, 5, 6 sont des vues en coupe transversale selon respectivement A-A, B-B, C-C.
La figure 7 est une vue en bout d'un empilage de poutres formant la paroi selon l'invention.
La figure 8 est une vue en perspective illustrant comment peut être réalisée la fonction longitudinale entre deux poutres.
Les figures 9 et 10 sont des figures similaires à la figure 3 montrant deux variantes de réalisation de poutres utilisables dans l'invention.

La poutre (1) que comporte la paroi selon l'invention se présente sous la forme d'un profil allongé dont la longueur (L) est supérieure à la hauteur (H) et à l'épaisseur (E).

La dite poutre (1) est constituée d'un assemblage d'éléments, et principalement de deux parois latérales de poutre (1a, 1b) et d'une paroi interne de poutre (1c).

On notera que les deux parois latérales de poutre (1a, 1b) sont parallèles et espacées l'une de l'autre pour créer un espace interne (2). Dans cet espace interne (2) s'étend la paroi interne de poutre (1c). Ladite paroi interne de poutre (1c) s'étend longitudinalement et parallèlement aux deux parois latérales de poutre (1a, 1b), par ailleurs dans cet espace interne (2) sont disposées une succession d'entretoises (3a, 3b, 3c,....- 3'a, 3'b, 3'c....) et d'éléments d'isolation (4a, 4b, 4c,.....- 4'a, 4'b, 4'c...).

Ajoutons que les parois latérales (1a, 1b) et la paroi interne (1c) sont avantageusement des planches de bois massif, mais pourraient être en tout autre matériau tel qu'en bois reconstitué ou composite. On notera aussi que la hauteur (H) de chacune des parois de poutre est avantageusement égale. Bien entendu il pourrait en être autrement et par exemple la paroi interne (1c) pourrait avoir une hauteur inférieure à celles des deux parois latérales (1a, 1b)

La paroi interne (1c) sépare l'espace interne (2) en deux espaces latéraux internes (2a, 2b). Ainsi dans chacun des espaces latéraux internes (2a, 2b) sont disposés une succession d'entretoises (3a, 3b, 3c,....-3'a, 3'b, 3'c,...) et d'éléments d'isolation (4a, 4b, 4c,..... 4'a, 4'b, 4'c...). Chaque entretoise du même espace latéral est séparée de l'entretoise suivante pour former entre chacune des entretoises un espace de remplissage comprenant l'élément d'isolation.

Les entretoises sont fixées aux parois par tout moyen tel que par collage ou cloutage. Notons aussi que les entretoises sont en matériau rigide comme du bois ou autre et qu'elles peuvent être monobloc ou réalisées avec un assemblage de plaques de bois, ou autre tel qu'en bois massif, ou en bois reconstitué ou composite.

Le matériau isolant peut être de la mousse synthétique telle que du polystyrène du polyuréthane ou autre, voire en fibres minérales, en fibres de bois, ou en vermiculite. :

Précisons que les entretoises de l'un des espaces latéraux sont décalées par rapport aux entretoises de l'autre espace latéral. Ainsi, au droit de chacune des entretoises se trouve un espace de remplissage et non un bloc entretoise.

Précisons aussi, que les entretoises disposées dans les espaces latéraux sont fixées aux parois adjacentes, à savoir d'une part à la paroi latérale de poutre correspondante, et d'autre part à la paroi interne de poutre.

Notons que, selon l'invention, les entretoises et le matériau d'isolation s'étendent sur toute la hauteur (H) des parois.

Ajoutons qu'aux deux extrémités (5a, 5b) de la poutre (1) il est prévu des blocs d'extrémités (6a, 6b) fermant vers les extrémités les espaces latéraux (1a, 1b, 1c).

Les épaisseurs (E1, E2, E3) des trois parois (1a, 1b, 1c) constituant la poutre peuvent être identiques mais elles peuvent être différentes. Ainsi et par exemple les épaisseurs (E1 et E2) des deux parois latérales (1a, 1b) sont égales mais supérieures à l'épaisseur (E3) de la paroi interne (1c). Bien entendu l'épaisseur (E1) de la paroi latérale externe (la) est selon une variante supérieure à l'épaisseur (E2) de la paroi latérale interne (1b).

Les différentes parois (1a, 1b, 1c) constituant la poutre peuvent être réalisées dans la même matière tel qu'en bois, mais elles peuvent être réalisées avec des matériaux différents.

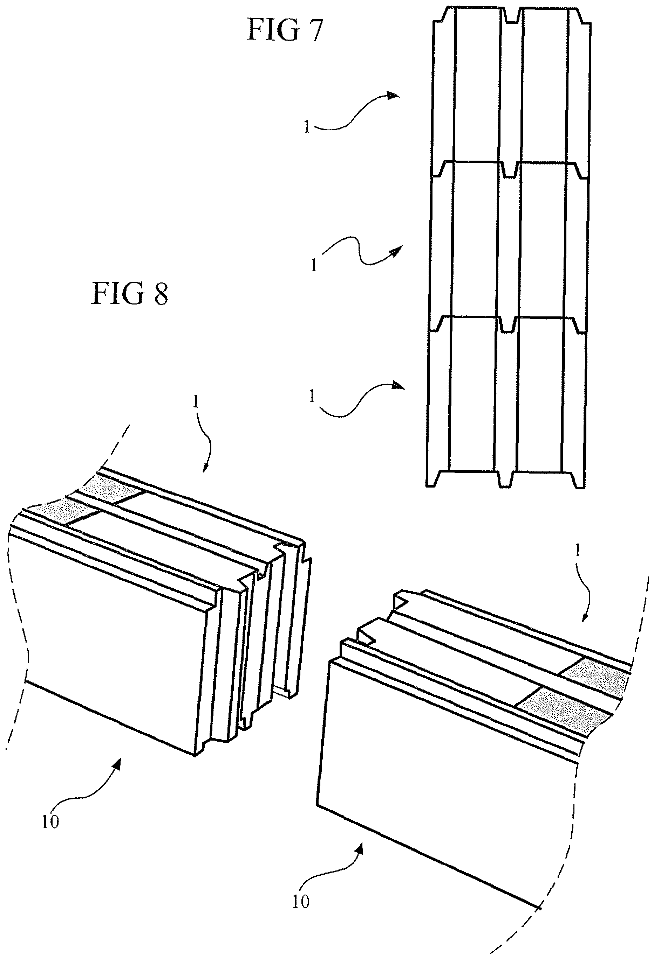

Afin de réaliser une paroi (7) avec un empilage de poutres (1), les poutres successives adjacentes sont retenues l'une à l'autre par coopération de formes. A savoir par emboitement de profil en saillie avec des profils en creux correspondant, tel que cela apparait à la figure 7.

Ainsi comme cela est illustré, les bordures (8) supérieures et inférieures (9) des parois latérales (1a, 1b) de poutre coopèrent par coopération d'un profil en saillie longitudinal avec un profil en creux longitudinal. De même les bordures supérieures (10) et inférieures (11) de la paroi interne (1c) de la poutre coopèrent par coopération d'un profil en saillie longitudinal avec un profil en creux longitudinal.

Afin de pouvoir mettre bout à bout deux poutres pour prolonger la longueur d'une poutre les extrémités des poutres coopèrent avec la poutre suivante dans l'alignement, par coopération de forme, tel que cela est illustré à la figure 8.

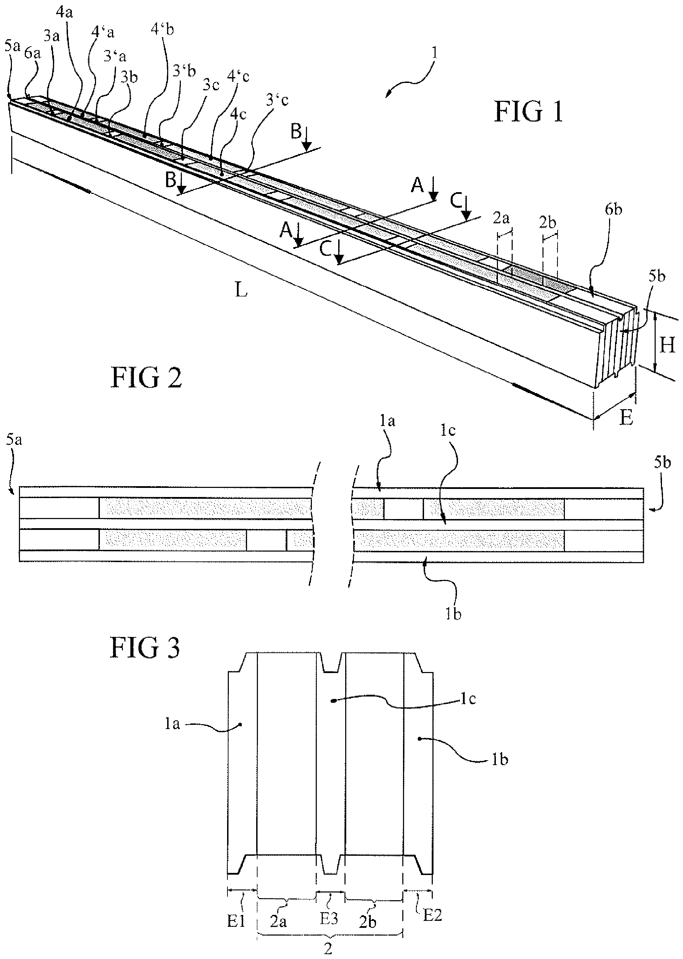

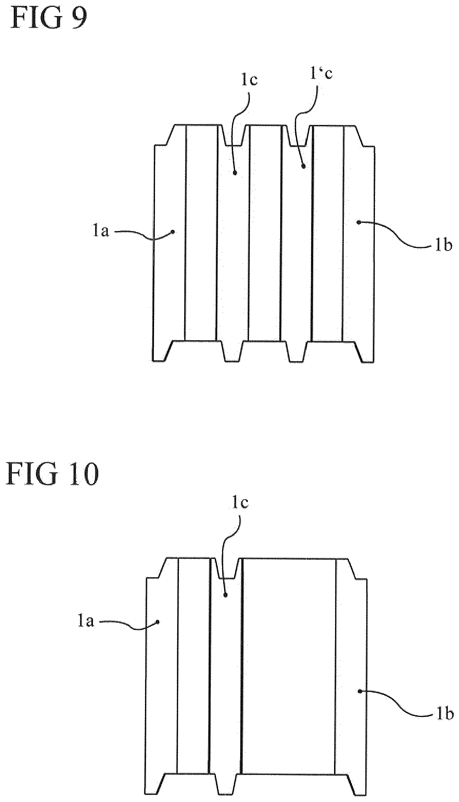

Les figures 9 et 10 sont des figures similaires à la figure 3 montrant deux variantes de poutres utilisables dans la paroi selon l'invention.

Selon la figure 9 la poutre comprend deux parois internes (1c, 1'c).

La figure 10 est une illustration montrant une poutre selon laquelle la paroi interne (1c) n'est pas au centre de l'espace (2), mais décalée latéralement.

Bien entendu la poutre de l'invention pourrait ne pas avoir deux blocs d'extrémité, et les extrémités pourraient être arrêtées, à tout endroit approprié. Il va de soi aussi que l'on ne sortirait pas du cadre de l'invention si l'une ou l'autre des extrémités de la poutre n'était pas fermée.

La figure 8 illustre la jonction longitudinale de deux poutres de l'invention mais l'une des poutres pourrait être associée en extrémité par une poutre d'un tout autre genre voir d'un poteau vertical.

Précisons que la longueur des zones comprenant le matériau d'isolation est supérieure à la longueur des entretoises.

## Revendications

1. Paroi obtenue par empilement vertical de poutres horizontales, chaque poutre (1) se présentant sous la forme d'un profil allongé dont la longueur (L) est supérieure à la hauteur (H) et à l'épaisseur (E), destinée à la réalisation d'un mur d'habitation, la dite poutre (1) comprenant une isolation intégrée, et étant constituée d'un assemblage d'éléments, et principalement de deux parois latérales de poutre (1a, 1b) et une paroi interne de poutre (1c), tandis que les deux parois latérales de poutre (1a, 1b) sont parallèles et espacées l'une de l'autre pour créer un espace interne (2), dans lequel s'étend la paroi interne de poutre (1c), la paroi interne de poutre (1c) s'étend longitudinalement et parallèlement aux deux parois latérales de poutre (1a, 1b), pour constituer deux espaces latéraux internes (2a, 2b), tandis que dans chacun des espaces latéraux internes (2a, 2b) sont disposés une succession d'entretoises (3a, 3b, 3c,....-3'a, 3'b, 3'c,...) et d'éléments d'isolation (4a, 4b, 4c,..... 4'a, 4'b, 4'c...), chaque entretoise du même espace latéral est séparée de l'entretoise suivante pour former entre chacune des entretoises un espace de remplissage comprenant l'élément d'isolation, **caractérisée en ce que** les entretoises (3a, 3b, 3c,....-3'a, 3'b, 3'c,...) sont agencées perpendiculairement aux deux parois latérales de poutre (1a, 1b) et à la paroi interne de poutre (1c), tandis que les entretoises et le matériau d'isolation s'étendent sur toute la hauteur (H) desdites parois latérales de poutre (1a, 1b) et interne de poutre (1c).

2. Paroi selon la revendication précédente, **caractérisée en ce que** les entretoises sont fixées aux parois.

3. Paroi selon la revendication précédente, **caractérisée en ce que** les entretoises sont en matériau rigide comme du bois et qu'elles peuvent être monobloc ou réalisées avec un assemblage de plaques de bois.

4. Paroi selon l'une quelconque des revendications précédentes, **caractérisée en ce que** les parois latérales (1a, 1b) et la paroi interne (2) sont des planches de bois.

5. Paroi selon l'une quelconque des revendications précédentes, **caractérisée en ce que** la hauteur (H) de chacune des parois de poutre sont égales.

6. Paroi selon l'une quelconque des revendications précédentes, **caractérisée en ce que** le matériau isolant est de la mousse synthétique telle que du polystyrène du polyuréthane, voir en laine de roche, en fibres de bois, ou en vermiculite.

7. Paroi selon l'une quelconque des revendications précédentes, **caractérisée en ce que** les entretoises de l'un des espaces latéraux sont décalés par rapport aux blocs entretoises de l'autre espace latéral.

8. Paroi selon l'une quelconque des revendications précédentes, **caractérisée en ce que** les entretoises disposées dans les espaces latéraux sont fixées aux parois adjacentes, à savoir d'une part à la paroi latérale de poutre correspondante, et d'autre part à la paroi interne de poutre.

9. Paroi selon l'une quelconque des revendications précédentes, **caractérisée en ce que** les épaisseurs (E1, E2, E3) des trois parois constituant la poutre sont identiques.

10. Paroi selon l'une quelconque des revendications 1 à 8, **caractérisée en ce que** les épaisseurs (E1, E2, E3) des trois parois sont différentes.

11. Paroi selon l'une quelconque des revendications précédentes, **caractérisée en ce que** les poutres successives adjacentes sont retenues l'une à l'autre par coopération de formes.

## Patentansprüche

1. Wand, die durch vertikales Stapeln von horizontalen Balken gewonnen wir d, wobei sich jeder Balken (1) in der Form eines länglichen Profils besteht, dessen Länge (L) größer ist als die Höhe (H) und die Stärke (E), bestimmt für die Errichtung einer Hausmauer, wobei der Balken (1) eine integrierte Isolation umfasst und aus einer Zusammenstellung von Elementen konstituiert ist und hauptsächlich aus zwei lateralen Balkenwänden (1a, 1b) und einer inneren Balkenwand (1c), wobei die beiden lateralen Balkenwände (1a, 1b) parallel und voneinander beabstandet sind, um einen inneren Raum (2) zu schaffen, in welchem sich die innere Balkenwand (1c) erstreckt, wobei sich die innere Balkenwand (1c) längs und parallel zu den beiden lateralen Balkenwänden (1a, 1b) erstreckt, um zwei laterale innere Räume (2a, 2b) zu konstituieren, wobei in jedem der lateralen Räume (2a, 2b) eine Abfolge von Verstrebungen (3a, 3b, 3c,....-3'a, 3'b, 3'c,...) und von Isolierungselementen (4a, 4b, 4c,..... 4'a, 4'b, 4'c...) angeordnet sind, wobei jede Verstrebung desselben lateralen Raumes von der folgenden Verstrebung getrennt ist, um zwischen jeder der Verstrebungen einen Füllraum zu schaffen, der das Isolierungselement enthält, **dadurch gekennzeichnet, dass** die Verstrebungen (3a, 3b, 3c,....-3'a, 3'b, 3'c,...) rechtwinklig zu den beiden lateralen Balkenwänden (1a, 1b) und der inneren Balkenwand (1c) angeordnet sind, wobei sich die Verstrebungen und das Isolierungsmaterial über die gesamte Höhe (H) der lateralen (1a, 1b) und inneren Balkenwände (1c) erstrecken.

2. Wand nach dem vorhergehenden Anspruch, **dadurch gekennzeichnet, dass** die Verstrebungen an den Wänden befestigt sind.

3. Wand nach dem vorhergehenden Anspruch, **dadurch gekennzeichnet, dass** die Verstrebungen aus rigidem Material wie Holz bestehen und dass sie einteilig oder mit einem Zusammenbau von Holzplatten errichtet sein können.

4. Wand nach einem der vorhergehenden Ansprüche, **dadurch gekennzeichnet, dass** es sich bei den lateralen Wänden (1a, 1b) und der inneren Wand (2) um Holzplatten handelt.

5. Wand nach einem der vorhergehenden Ansprüche, **dadurch gekennzeichnet, dass** die Höhe (H) jeder der Balkenwände gleich ist.

6. Wand nach einem der vorhergehenden Ansprüche, **dadurch gekennzeichnet, dass** es sich bei dem isolierenden Material um synthetischen Schaumstoff wie Polyurethanpolystyren handelt, oder aber aus Steinwolle, aus Holzfasern oder aus Vermiculit.

7. Wand nach einem der vorhergehenden Ansprüche, **dadurch gekennzeichnet, dass** die Verstrebungen eines der lateralen Räume in Bezug auf die Verstrebungsblöcke des anderen lateralen Raumes versetzt sind.

8. Wand nach einem der vorhergehenden Ansprüche, **dadurch gekennzeichnet, dass** die Verstrebungen, die in den lateralen Räumen angeordnet sind, an den angrenzenden Wänden befestigt sind, nämlich einerseits an der entsprechenden lateralen Balkenwand und andererseits an der inneren Balkenwand.

9. Wand nach einem der vorhergehenden Ansprüche, **dadurch gekennzeichnet, dass** die Stärken (E1, E2, E3) der drei Wände, die den Balken konstituieren, identisch sind.

10. Wand nach einem der Ansprüche 1 bis 8, **dadurch gekennzeichnet, dass** die Stärken (E1, E2, E3) der drei Wände unterschiedlich sind.

11. Wand nach einem der vorhergehenden Ansprüche, **dadurch gekennzeichnet, dass** die aufeinander folgenden angrenzenden Balken formschlüssig aneinander gehalten werden.

## Claims

1. A wall obtained by a vertical stacking of horizontal beams, each beam (1) being in the form of an elongated profile whose length (L) is larger than its height (H) and its thickness (E), intended for making a residential wall, said beam (1) comprising an integrated insulation, and being formed by an assembly of elements, and mainly of two beam lateral walls (1a, 1b) and a beam inner wall (1c), whereas the two beam lateral walls (1a, 1b) are parallel and spaced apart from each other so as to create an inner space (2), within which the beam inner wall (1c) extends, the beam inner wall (1c) extends longitudinally and parallel to the two beam lateral walls (1a, 1b), so as to form two inner lateral spaces (2a, 2b), whereas in each of the inner lateral spaces (2a, 2b) are disposed a series of spacers (3a, 3b, 3c,..., -3'a, 3'b, 3'c,...) and insulation elements (4a, 4b, 4c,..., 4'a, 4'b, 4'c,...), each spacer of the same lateral space is separated from the next spacer so as to form between each of the spacers a filling space comprising the insulation element, **characterised in that** the spacers (3a, 3b, 3c,..., -3'a, 3'b, 3'c,...) are arranged perpendicularly to the two beam lateral walls (1a, 1b) and to the beam inner wall (1c), whereas the spacers and the insulation material extend over the entire height (H) of said beam lateral walls (1a, 1b) and beam inner wall (1c).

2. The wall according to the preceding claim, **characterised in that** the spacers are fastened to the walls.

3. The wall according to the preceding claim, **characterised in that** the spacers are made of a rigid material such as wood and that they could be integral in one piece or made with an assembly of wooden plates.

4. The wall according to any one of the preceding claims, **characterised in that** the lateral walls (1a, 1b) and the inner wall (2) are wooden planks.

5. The wall according to any one of the preceding claims, **characterised in that** the height (H) of each of the beam walls are equal.

6. The wall according to any one of the preceding claims, **characterised in that** the insulating material is synthetic foam such as polystyrene, polyurethane, or still rock wool, wood fibres or vermiculite.

7. The wall according to any one of the preceding claims, **characterised in that** the spacers of one of the lateral spaces are offset with respect to the spacer blocks of the other lateral space.

8. The wall according to any one of the preceding claims, **characterised in that** the spacers disposed in the lateral spaces are fastened to the adjacent walls, namely on the one hand to the corresponding beam lateral wall, and on the other hand to the beam inner wall.

9. The wall according to any one of the preceding claims, **characterised in that** the thicknesses (E1, E2, E3) of the three walls forming the beam are identical.

10. The wall according to any one of Claims 1 to 8, **characterised in that** the thicknesses (E1, E2, E3) of the three walls are different.

11. The wall according to any one of the preceding claims, **characterised in that** the successive adjacent beams are held together by shape matching.
